(19) **Europäisches Patentamt**
**European Patent Office**
**Office européen des brevets**

(11) **EP 2 125 959 B1**

(12) **EUROPEAN PATENT SPECIFICATION**

(45) Date of publication and mention
of the grant of the patent:
**16.06.2010   Bulletin 2010/24**

(51) Int Cl.:
***C08L 95/00*** *(2006.01)*

(21) Application number: **07858020.6**

(22) Date of filing: **20.12.2007**

(86) International application number:
**PCT/EP2007/064401**

(87) International publication number:
**WO 2008/077913 (03.07.2008 Gazette 2008/27)**

(54) **ASPHALT COMPOSITION AND ADHESIVE SHEET**

ASPHALTZUSAMMENSETZUNG UND KLEBFOLIE

COMPOSITION D'ASPHALTE ET FEUILLE ADHÉSIVE

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **26.12.2006   JP 2006349884
26.12.2006   JP 2006349890**

(43) Date of publication of application:
**02.12.2009   Bulletin 2009/49**

(73) Proprietor: **Shell Internationale Research
Maatschappij B.V.
2596 HR The Hague (NL)**

(72) Inventors:
• **SEO, Akira
Tokyo 135-8074 (JP)**
• **INOUE, Masaya
Tokyo 135-8074 (JP)**

(74) Representative: **Matthezing, Robert Maarten
Shell International B.V.
Intellectual Property Services
P.O. Box 384
2501 CJ The Hague (NL)**

(56) References cited:
**EP-A- 0 658 603     JP-A- 2006 299 024
US-A- 5 670 562     US-A- 5 776 234**

**Description**

Field of the Invention

This invention relates to an asphalt composition used as an adhesive and an adhesive sheet which uses this asphalt composition. In particular, it relates to an asphalt composition and adhesive sheet suitable for public works construction applications such as rooftop waterproof sheeting, civil engineering waterproof sheeting and waterproof/damp-proof sheeting for housing.

Background of the Invention

Various waterproofing treatments are performed on the roofs of houses or the tops of concrete buildings and the like to prevent water leaking inside. The procedure adopted hitherto for such waterproofing work has been to form a waterproof layer by spraying or pouring a heated and molten asphalt composition into the places where it is desired to perform the waterproofing treatment. However, this procedure has the problems that the asphalt must be heated on site during the work and that an offensive smell is generated.

Therefore in the prior art asphalt compositions which have a reduced dissolving temperature have been proposed for use in waterproofing work (for example, see JP 2005-213981). JP 2005-213981 discloses an asphalt composition which contains from 40 to 90 mass % of asphalt and from 10 to 30 mass % of a reactivity imparting material such as a mixture of a polyol and a polyhydric isocyanate, or an epoxy resin, and in which the melt viscosity is from 30 to 2000 mPa · sec in the range of from 80 to 150°C and the softening point before reaction and hardening is not less than 60°C. However, the asphalt composition described in JP 2005-213981 relates to a technique for forming a waterproof material by effecting a hardening reaction of the epoxy or urethane, and so it is not possible to obtain a waterproof material having the desired performance such as described in JP 2005-213981 unless the reaction temperatures (outside air temperature and material temperature), humidity and concentrations (amounts supplied of each material) are strictly controlled. But conditions such as air temperature and humidity cannot be predicted, and there are problems in that it is difficult to control these conditions strictly on work sites where the conditions are not stable.

On the other hand, attention has recently been focused on self-adhesive waterproof sheets where an adhesive layer comprised of an asphalt composition is disposed on a substrate. Since it is not necessary to heat the self-adhesive waterproof sheets during the building work and none of the offensive smells that accompany heating are generated, they constitute a process that economises on energy and shows concern for the environment, and they have begun to become widely used in buildings with a high public profile such as the Fukuoka Dome and Nagoya Dome as well as to waterproof the roofs of ordinary houses. It can be expected that the area under use will increase in future.

In general, self-adhesive waterproof sheets are manufactured by impregnating or coating a substrate such as a non-woven fabric with an asphalt adhesive. In this case, a composition in which an elastomer and/or a tackifier is added is used for the asphalt composition which forms an adhesive layer (for example, see JP 3-070785 or JP 2006-299024). The waterproof sheet described in JP 3-070785 uses an asphalt composition to which have been added from 10 to 100 parts by mass of a rubber such as a styrene-butadiene-styrene block copolymer (SBS) and from 10 to 100 parts by mass of a tackifier such as a rosin-based resin per 100 parts by mass of asphalt. In addition, JP 2006-299024 proposes an asphalt adhesive composition which is a composition containing from 3 to 40 mass % of a block copolymer comprised of a polymer block comprised mainly of a monoalkenyl aromatic compound and a polymer block comprised mainly of a conjugated diene compound, or a substance in which a rubber polymer is added to this copolymer block, 0 to 60 mass % of a tackifier such as a rosin-based resin, 0 to 50 mass % of a softening agent such as a paraffin-based process oil, and 10 to 90 mass % of asphalt.

However, self-adhesive waterproof sheets of the prior art use asphalt compositions which are considered good on the basis of experience. The temperatures at which their adhesiveness is exhibited have a range of some 20°C, for example from 10 to 30°C or from 20 to 40°C in terms of material temperature, and there is the problem that it is difficult to use them throughout the year. In specific terms, if they are used outdoors, the material temperature of the adhesive layer falls to close to 0°C in winter and rises to close to 50°C in summer. It is therefore necessary to select the asphalt composition according to the temperature at the time of the work, and if a mistake is made in selection, separation and peeling of the self-adhesive waterproof sheet will arise because of insufficient adhesive strength, and the waterproofing will be unsatisfactory.

Furthermore, the asphalt composition used in adhesive waterproof sheets as described in JP 3-070785 is a material which is used for the adhesive layer on expensive sheet waterproofing and does not of itself exhibit the waterproofing performance. Therefore, at times when the amount of rubber in the blend is small (5 to 8 mass %), the amount of tackifier in the blend becomes too large, and the storage shear modulus becomes small, so that there is a problem in that there will be a possibility that separation may occur in use during the summer months. The adhesive waterproof sheets described in JP 3-070785 are considered not to be problematical in practice because the waterproofing performance is not sustained by the asphalt composition alone, but they cannot be used in applications where the waterproofing performance has to be sustained by the asphalt composition alone. Also, at times when the amount of rubber in the blend is high (30 to 40 mass %), the viscosity of the asphalt composition becomes too high, so that there is a problem in that manufacture becomes difficult or special manufacturing apparatus becomes necessary.

On the other hand, in order for the asphalt composition described in JP 2006-299024 to be capable of use over a wide range of temperatures, a block copolymer containing a polymer block comprised mainly of a monoalkenyl compound and a polymer block comprised mainly of a conjugated diene compound is added to the asphalt, but since the adhesive strength of this asphalt adhesive composition at low temperatures is evaluated by a finger tack test in the atmosphere at 5°C and the specimen will be warmed by the body temperature during this test, it is not possible to confirm the adhesive performance at the temperature used at the time of actual work as described above. Also, in the examples of embodiment in JP 2006-299024, only examples with a mixture of 13 mass % of SBS and 87 mass % of straight asphalt are shown, and the effectiveness of the blend constituents described in the claims cannot be verified. Consequently, in cases where the asphalt adhesive composition described in JP 2006-299024 is used, there is a risk that the best adhesiveness cannot be obtained in the temperature range from 5 to 50°C.

This invention is being submitted in the light of the problems mentioned above. The objective of the invention is to offer an asphalt composition and an adhesive sheet which have excellent adhesiveness in the temperature range from 5 to 50°C, and which can be used outdoors throughout the year.

Summary of the Invention

The asphalt composition relating to this invention is characterised in that it contains from 8 to 14 mass % of a thermoplastic elastomer, from 1 to 5 mass % of resin acid and from 20 to 60 mass % of a petroleum-based solvent-extracted oil, the remainder being comprised of asphalt, and in that when the measuring frequency is 6.28 rad/sec, the storage shear modulus at 10°C is not more than $1 \times 10^5$ Pa and the storage shear modulus at 60°C is not less than $4 \times 10^3$ Pa, and in that the total acid number is not less than 1.5 mgKOH/g.

In the asphalt composition of this invention, the ratio in which the asphalt and thermoplastic elastomer are blended is optimised, the storage shear modulus at 10°C is set at not more than $1 \times 10^5$ Pa and the storage shear modulus at 60°C is not less than $4 \times 10^3$ Pa, so it is possible to minimise the temperature dependence of the adhesiveness. Also, because a suitable amount of resin acid is added to the composition as a material having polar groups and the total acid number of the asphalt composition is set at not less than 1.5 mgKOH/g, it is possible to improve the adhesive strength of the asphalt composition. As a result, it is possible for it to exhibit excellent adhesiveness in a temperature range wider than hitherto, namely from 5 to 50°C.

It is preferable for the total acid number of this asphalt composition to be not more than 12 mgKOH/g.

For the aforementioned thermoplastic elastomers it is possible to use, for example, styrene-butadiene-styrene copolymer (SBS), styrene-isoprene-styrene copolymer (SIS), styrene-ethylene-butylene-styrene copolymer (SEBS) or styrene-ethylene-propylene-styrene (SEPS).

For the aforementioned resin acids, it is possible to use, for example, rosin, disproportionated rosin, dimers or trimers derived from abietic acid, or mixtures of two or more kinds thereof.

Further, for the aforementioned asphalt it is possible to use, for example, solvent deasphalted asphalt, straight asphalt or mixtures of these asphalts.

The adhesive sheet relating to this invention is characterised in that an adhesive layer comprised of the aforementioned asphalt composition is disposed on one side of the substrate.

In the adhesive sheet of this invention, the adhesive layer is formed by means of the aforementioned asphalt composition, so that the temperature dependence of the adhesive layer is minimised, and excellent adhesiveness can be obtained in the temperature range from 5 to 50°C. Therefore, no separation or peeling due to insufficient adhesive strength occurs even under outdoor use, and it can be used throughout the year.

This adhesive sheet can use a non-woven fabric for the aforementioned substrate.

According to this invention, excellent adhesiveness is obtained for the temperature range from 5 to 50°C because the storage shear modulus at 10°C and 60°C, the total acid number of the asphalt composition and the ratio in which the asphalt and thermoplastic elastomer are mixed have been optimised, and because resin acids are added. It is possible to use the asphalt composition all year round even in outdoor work.

Brief Explanation of Drawing

Figure 1 is a simplified oblique view of the measuring portion of a dynamic viscoelasticity test apparatus.

Figure 2 is a simplified oblique view of a method of measuring peel strength.

Figure 3(a) is a cross-sectional view of the test specimen shown in Figure 2 and Figure 3(b) is an expanded cross-sectional view showing part of the specimen.

Detailed Description of the Invention

The invention is explained in detail below as regards the optimum configuration to embody the invention. The inventors have carried out intensive experiments and research in order to resolve the problems mentioned above and to obtain an asphalt compound which exhibits adhesiveness over a wider temperature range than previously. As a result, the inventors have discovered that, by setting the storage shear modulus of the asphalt compound at the right value, by optimising the content of asphalt and thermoplastic elastomer and by incorporating a material having polar groups, the temperature dependence of the adhesiveness of the asphalt composition is minimised and it exhibits excellent adhesiveness in the temperature range from 5 to 50°C. In specific terms, in this invention the content of the asphalt and thermoplastic elastomer is optimised, a suitable amount of a petroleum-based solvent-extracted oil is incorporated, a suitable amount of resin acid is added to the composition as a material having polar groups and the storage shear modulus is set such that, when the measuring-frequency is 6.28 rad/sec, the storage shear modulus at 10°C should be not more than $1 \times 10^5$ Pa and the storage shear modulus at 60°C should be not less than $4 \times 10^3$ P.

An explanation is given below of the reasons for limiting the numerical values in the asphalt compound of this invention.

Thermoplastic elastomer at 8 to 14 mass %: A thermoplastic elastomer has the effect of minimising temperature dependence of the viscoelastic properties. In this invention, the temperature dependence of the properties and characteristics of the asphalt composition is minimised by controlling the ratio in which the thermoplastic elastomer and asphalt are mixed. The variations in the properties and characteristics due to temperature are kept within a suitable range. However, if the content of the thermoplastic elastomer relative to the total mass of the asphalt composition is less than 8 mass %, the temperature dependence of the properties and characteristics becomes too large, and it is difficult to obtain suitable properties and characteristics over a wide temperature range, so that good adhesiveness is not obtained, and in particular the adhesive strength at high temperatures decreases. If the content of the thermoplastic elastomer exceeds 14 mass %, the temperature dependence of the properties and characteristics becomes too small and the adhesive strength at low temperatures cannot be sustained. Also, the thermal stability and storage stability of the adhesive will deteriorate and a uniform composition cannot be obtained. The content of the thermoplastic elastomer should therefore be kept at from 8 to 14 mass %.

As examples-of the thermoplastic elastomers added to the asphalt composition of this invention, mention may be made of styrene-butadiene-styrene copolymer (SBS), styrene-isoprene-styrene copolymer (SIS), styrene-ethylene-butylene-styrene copolymer (SEBS) and styrene-ethylene-propylene-styrene (SEPS). Among these thermoplastic elastomers, it is preferable in particular to use SBS, which has a small reduction in storage shear modulus due to decomposition at the manufacturing and processing temperatures of the adhesive (about 180 to 200°C) and which is a cheaper elastomer than the later mentioned hydrogenated thermoplastic elastomers. Hydrogenated thermoplastic elastomers obtained by hydrogenating SBS and SIS may be added as thermoplastic elastomers to the asphalt composition of this invention. It is possible, by this means, further to reduce changes in the elastic modulus during processing and so to achieve stable characteristics.

Resin acid at 1 to 5 mass %: Resin acids are organic acids which exist free or as esters in natural resins, and they are added in order to improve the adhesive strength of the asphalt composition. However, if the amount of resin acid contained is less than 1 mass %, the polar groups within the asphalt composition are diminished and when adhesion is made onto elements having many polar groups such as timber, stone, concrete or non-woven fabrics, no increase in strength of the adhesive force due to the hydrogen bonds can be expected. If the resin content exceeds 5 mass %, the viscosity and elasticity of the asphalt composition in the region close to 60°C will become low and, as well as peeling being prone to occur at high temperatures, the thermal stability and storage stability of the composition will also decrease. The content of the resin acids in the asphalt composition should therefore be kept at from 1 to 5 mass %.

For the resin acids added to the asphalt composition of this invention it is possible to use rosin, disproportionated rosin, dimers or trimers derived from abietic acid, or mixtures of two or more kinds thereof. These resin acids dissolve and disperse easily within the asphalt and so it is possible to eliminate bias or spreading of the acid number in the asphalt composition.

Petroleum-based solvent-extracted oil at 20 to 60 mass %: Petroleum-based solvent-extracted oils are extracted oils produced during solvent extraction processes when making lubricating oils from crude oil, and are oily substances rich in aromatic and naphthenic components (see "Before petroleum products are made", Figure 6-1 - General lubricating oil manufacturing processes', published by the Sekiyu Renmei, November 1971, p. 99, and "New Petroleum Dictionary", edited by the Institute of Petroleum, 1982, p. 304). When these petroleum-based solvent-extracted oils are added to asphalt compositions, they are the component which acts as a softener, and it is preferable if the boiling point is not less than 350°C, the viscosity at 100°C is 5 ~ 100 mPa · second, the flash point is not less than 250°C and the aromatic content is not less than 75 mass %. An example of such petroleum-based solvent-extracted oils is the solvent-extracted component of Bright Stock, extracted by means of solvents such as phenol, N-methylpyrrolidone, liquid sulphur dioxide and furfural in the crude oil refining process. If the content of petroleum-based solvent-extracted oil in the asphalt composition is less than 20 mass %, the storage stability cannot be sustained, spreading of the properties within the composition may occur, and scatter within the adhesive strength may occur. On the other hand, if the content of petroleum-based solvent-extracted oil exceeds 60 mass %, the composition softens too much and the adhesive strength at high temperatures will decrease. The content of the petroleum-based solvent-extracted oil should therefore be kept at from 20 to 60 mass %.

The other component, that is the remainder, in the asphalt composition of this invention other than those mentioned above is the asphalt. As examples of the asphalts used in the asphalt composition of this invention, mention may be made of straight asphalt (see JIS K 2207), solvent deasphalted asphalt (see " New Petroleum Dictionary", edited by the Institute of Petroleum, 1982, p. 308), or mixtures thereof.

Storage shear modulus at 10°C with a measuring frequency of 6.28 rad/sec of not more than $1 \times 10^5$ Pa: The storage shear modulus at 10°C is a guide to tack at low temperatures (0 to 10°C). In specific terms, when the measuring frequency is 6.28 rad/sec, if the storage shear modulus for 6.28 rad/sec at 10°C exceeds $1 \times 10^5$ Pa, the adhesive will not sufficiently deform when tacking and pressure are applied. For example, the area of contact of the timber, stone, cement or non-woven fabric element to which adhesion is required will become small and sufficient anchoring effect will not be obtained, so that it will not be possible to guarantee sufficient tack at low temperatures (0 to 10°C). The storage shear modulus at 10°C for a measuring frequency of 6.28 rad/sec should therefore be set at not more than $1 \times 10^5$ Pa.

Storage shear modulus at 60°C with a measuring frequency of 6.28 rad/sec of not less than $4 \times 10^3$ Pa: The storage-shear modulus at 60°C is a guide to cohesive strength at high temperatures (50 to 60°C). In specific terms, when the measuring frequency is 6.28 rad/sec, if the storage shear modulus at 60°C is less than $4 \times 10^3$ Pa, it is not possible to guarantee sufficient cohesive strength, and at high temperatures (50 to 60°C) the adhesive and the element to which adhesion is required will peel apart even when just a slight force is applied. The storage shear modulus at 60°C for a measuring frequency of 6.28 rad/sec should therefore be set at not less than $4 \times 10^3$ Pa.

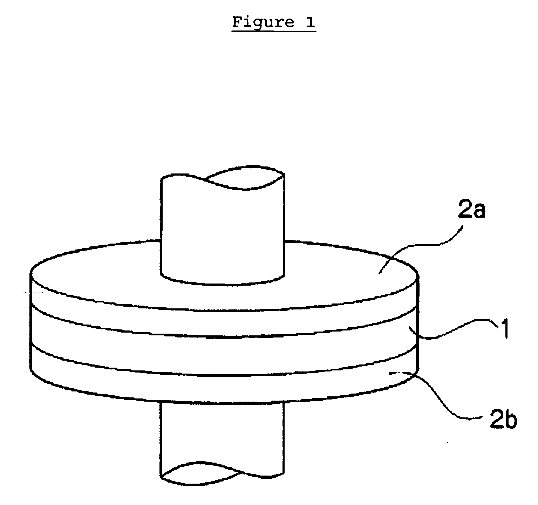

The storage shear modulus G' mentioned above is measured by means of a dynamic viscoelasticity test apparatus. Figure 1 shows a simplified oblique view of the measuring portion of a dynamic viscoelasticity test apparatus. In specific terms, as shown in Figure 1, the asphalt compound 1 is interposed between the two parallel discs 2a and 2b, and a sinusoidal strain is applied at the specified frequency to one disc, 2a. The sinusoidal stress σ transmitted to the other disc 2b via the asphalt composition 1 and the phase difference δ between the sine wave input to disc 2a and the sine wave input obtained from disc 2b are measured. The measurement conditions in this case for a measurement temperature of 60°C are a diameter of 25 mm for discs 2a and 2b, a thickness of 1 mm for the asphalt composition being measured and a strain of 10%. For a measurement temperature of 10°C they are a diameter of 8 mm for discs 2a and 2b, a thickness of 2 mm for the asphalt composition being measured and a strain of 1%. On the basis of the results of these measurements, the storage shear modulus G' is obtained from the mathematical formula (1) below. γ in the undermentioned mathematical formula (1) is the maximum strain applied to disc 2a:

$$G' = \frac{\sigma}{\gamma} \times \cos\delta \quad \cdots \cdots \quad (1)$$

Total acid number of not less than 1.5 mgKOH/g: The total acid number is a value influenced by the number of polar groups contained in the asphalt composition. In specific terms, if the total acid number is less than 1.5 mgKOH/g, the polar groups in the asphalt composition diminish. When adhesion is made to elements having large numbers of polar groups such as timber, stone, concrete and non-woven fabrics, no increase in strength of the adhesive force due to hydrogen bonds can be expected. The total acid number is therefore set at not less than 1.5 mgKOH/g in the asphalt composition of this invention. There is no special need to specify an upper limit for the total acid number, but if it exceeds 12 mgKOH/g, fatty acids which have a small storage shear modulus will be incorporated in large amounts and it may become impossible to sustain the storage shear modulus at 60°C in the asphalt composition as a whole. It is therefore preferable to ensure that the total acid number is not more than 12 mgKOH/g. The total acid number specified in this invention is the value measured on the basis of the procedure specified in JIS K 0070 (Test methods for acid number, saponification number, iodine number, hydroxyl value and unsaponifiable matter of chemical products).

As detailed above, the asphalt composition of this invention is made to exhibit excellent adhesiveness in the temperature range of from 5 to 50°C because it is possible to minimise the temperature dependence of the adhesiveness of the asphalt composition by optimising the ratio in which the asphalt and thermoplastic elastomer are blended,-by-setting-the storage shear modulus at 10°C at not more than $1 \times 10^5$ Pa and by setting the storage shear modulus at 60°C at not less than $4 \times 10^3$ Pa. It is possible to improve the adhesive strength of the asphalt composition by adding a suitable amount of resin acid to the composition as a material having polar groups and by setting the total acid number of the asphalt composition at not less than 1.5 mgKOH/g. As a result, it is possible to use the asphalt composition all year round, even in work outdoors.

Next follows an explanation of the adhesive sheet on one side of the substrate of which is disposed an adhesive layer comprised of the asphalt composition of the invention. For the substrate in the adhesive sheet of this invention it is possible to use, for example, non-woven fabric, cloth, paper, plastic sheeting, metal foil and metal mesh, but among these substrates non-woven fabric is easiest to impregnate with the asphalt composition, and so it is preferable to make the substrate a non-woven fabric. Also, there is no special restriction on the method of forming the adhesive layer on one side of the substrate, and the asphalt composition may be coated, sprayed or impregnated on to the substrate by means known in the art.

The adhesive sheet of this invention uses an asphalt composition which contains from 8 to 14 mass % of a thermoplastic elastomer, from 1 to 5 mass % of resin acid and from 20 to 60 mass % of a petroleum-based solvent-extracted oil, the remainder being comprised of asphalt, wherein when the measuring frequency is 6.28 rad/sec, the storage shear modulus at 10°C is not more than $1 \times 10^5$ Pa and the storage shear modulus at 60°C is not less than $4 \times 10^3$ Pa, and the total acid number is not less than 1.5 mgKOH/g, so that the temperature dependence of the adhesive layer is minimised and excellent adhesiveness can be obtained in the temperature range of from 5 to 50°C. As a result, it is possible to use it all year round, even in work outdoors, without any occurrence of peeling or separation due to insufficient adhesive strength. This adhesive sheet is therefore suitable for waterproof sheets used outdoors, such as waterproof sheeting on roofs, waterproof sheeting for civil engineering, and waterproof/damp-proof sheeting for housing.

The asphalt composition of this invention may be used not only in the adhesive sheet application mentioned above but also as an adhesive alone, and may also be used as road pavement material, repair material or filler material by exploiting its high adhesiveness.

Examples

The effect of the invention is explained in more concrete detail below by means of examples of embodiment and comparative examples. In the examples of embodiment, the asphalt, petroleum-based solvent-extracted oil, thermoplastic elastomer and resin acids were mixed in the proportions shown in Table 1 below, to prepare the asphalt compositions of the examples of embodiment and comparative examples. The mixing conditions in this case were a mixing temperature of 170°C, a mixing time of 120 minutes, and a mixer speed of 3000 revolutions/minute. In the examples of embodiment, the asphalt used was an asphalt with a penetration at 25°C of 8 (1/10 mm), a softening point of 66.5°C, a density at 15°C of 1028 kg/m$^3$, a flash point of 352°C, an aromatic component of 61 mass % and an asphaltene component of 14 mass %. The petroleum-based solvent- extracted oil used was an oil with a viscosity at 100°C of 0.060 Pa·sec, a density at 15°C of 974.2 kg/cm$^3$, a flash point of 325°C, an aromatic component of 81 mass % and an asphaltene component of 0.90 mass %. The thermoplastic elastomer used was SBS which contained 31 mass % of styrene, had a density of 940 kg/cm$^3$ and had a viscosity at 25°C when made up as a 25 mass % toluene solution of 20 Pa·sec. Resin acid A shown in Table 1 below was disproportionated rosin with an acid number of 160 mgkOH/g and resin acid B was a mixture of dimer and trimer acids of abietic acid. Its acid number was 180 mgKOH/g. The total acid number and the storage shear modulus at 10°C and 60°C for a measuring frequency of 6.28 rad/sec (for the examples of embodiment and comparative examples 1 and 7-9) are also given in Table 1 below. The total acid number in this case was measured by the method specified in JIS K 0070. The storage shear modulus at 10°C and 60°C was measured by the method mentioned previously, using a dynamic viscoelasticity test machine (ARES) manufactured by T. A. Instruments Ltd. The underlined values in Table 1 below denote values outside the ranges of this invention.

Table 1

| | Composition (Mass %) | | | | | Total acid number (mgKOHg) | Storage shear modulus (Pa) | |
|---|---|---|---|---|---|---|---|---|
| | Asphalt | Petroleum based solvent extracted oil | Thermoplastic elastomer | Resin acid A | Resin acid B | | 10°C | 60°C |
| Ex. of Emb. 1 | 40.5 | 47.5 | 10.0 | 2.0 | - | 3.2 | 78,700 | 5,780 |
| Ex. of Emb. 2 | 40.5 | 47.5 | 10.0 | - | 2.0 | 3.6 | 67,700 | 4,760 |
| Ex. of Emb. 3 | 45.0 | 45.0 | 8.0 | 2.0 | - | 3.2 | 7,550 | 4,200 |

(continued)

| | Composition (Mass %) | | | | | Total acid number (mgKOHg) | Storage shear modulus (Pa) | |
|---|---|---|---|---|---|---|---|---|
| | Asphalt | Petroleum based solvent extracted oil | Thermoplastic elastomer | Resin acid A | Resin acid B | | 10°C | 60°C |
| Comp. Ex. 1 | 42.0 | 48.0 | 10.0 | - | - | 0.1 | 65,000 | 6,030 |
| Comp. Ex. 2 | 73.0 | 15.0 | 10.0 | 2.0 | - | 3.2 | - | - |
| Comp. Ex. 3 | 23.0 | 65.0 | 10.0 | 2.0 | - | 3.2 | - | - |
| Comp. Ex. 4 | 49.0 | 43.0 | 6.0 | 2.0 | - | 3.2 | - | - |
| Comp. Ex. 5 | 49.5 | 32.5 | 16.0 | 2.0 | - | 3.2 | - | - |
| Comp. Ex. 6 | 40.5 | 42.5 | 10.0 | - | 7.0 | 12.6 | - | - |
| Comp. Ex. 7 | 49.0 | 40.0 | 10.0 | 1.0 | - | 1.6 | 222,000 | 6,530 |
| Comp. Ex. 8 | 43.0 | 45.0 | 10.0 | 2.0 | - | 3.2 | 127,000 | 5,110 |
| Comp. Ex. 9 | 41.5 | 48.5 | 8.0 | 2.0 | - | 3.2 | 73,000 | 3,750 |

Next, an evaluation was made of the storage stability of the asphalt compositions of each of the examples of embodiment and comparative examples 1-6. For the storage stability, asphalt composition (approx. 250 g) was added to a depth of 12 cm and sealed inside an aluminium cylinder of internal diameter 5.2 cm and height 13 cm, and this was left inside an oven at 170°C for 72 hours. Then, using a viscometer made by Brookfield Inc., the viscosity of the top 4 cm and the bottom 4 cm of the asphalt composition was measured. The conditions for measuring the viscosity were that a rotor Sc 4-21 was used, the measurement speed was 20 rpm and the measuring temperature was 180°C. A viscosity ratio was then obtained from the ratio of the viscosity of the top portion and the viscosity of the bottom portion (top viscosity/bottom viscosity). In the results, compositions with a viscosity ratio of 0.9 to 1 were evaluated as "storage stability is good."

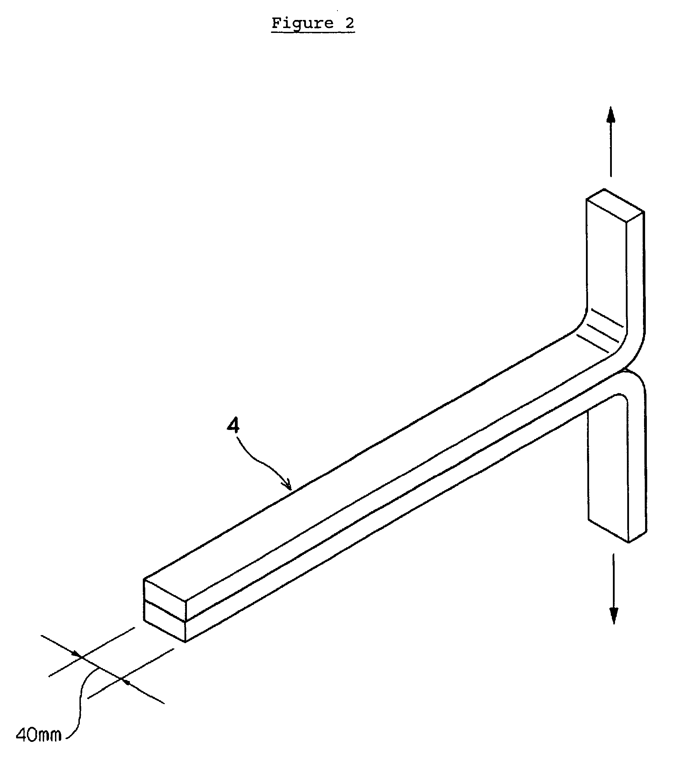

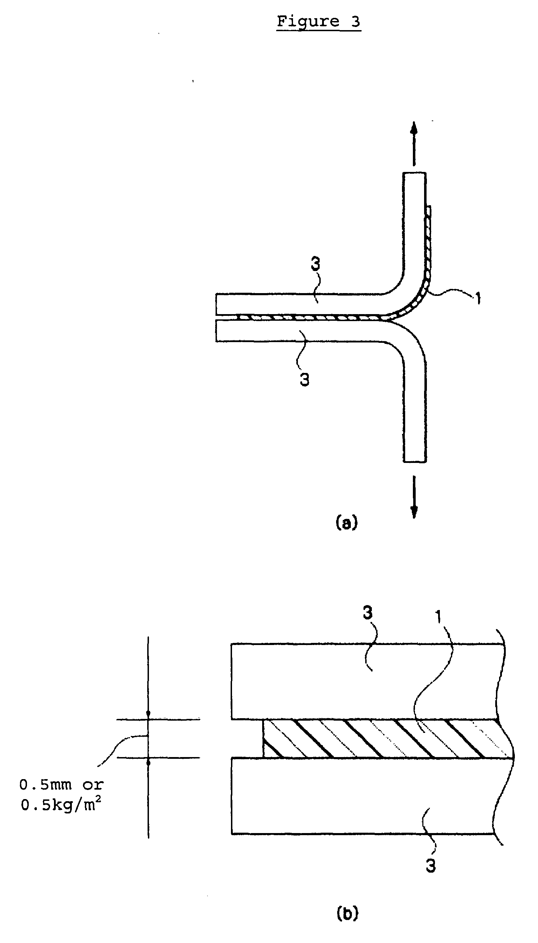

The peel strength was then measured in respect of compositions where the aforementioned storage stability was good. Figure 2 is a simplified oblique view of the method of measuring peel strength. Figure 3(a) is a cross-sectional view of the test specimen there, and Figure 3(b) is an expanded cross-sectional view of part of the test specimen. To measure the peel strength, as shown in Figures 2 and 3 0.5 kg/m$^2$ of each of the asphalt compositions 1 of the examples of embodiment and comparative examples was impregnated on one side of polyester non-woven fabric 3 with a fabric density amount of 55 g/m$^2$, to produce an adhesive sheet. The same polyester non-woven fabric as the one used for the substrate was stuck on to the adhesive layer side thereof, to produce a test specimen 4 of 40 mm width. For this purpose, the non-woven fabric impregnated with the asphalt composition and the non-woven fabric used for sticking together were cured for 2 hours in a constant temperature tank set at the test temperature. Once their temperatures had reached the test temperature, a test specimen 4 was made by sticking them together. Using this test specimen 4, a 180° peel test was then carried out in accordance with JIS K 6854-3 (Method for Separation and Contact Strength Test - Part 3: T shape separation). The test conditions in this case were a material temperature and test temperature of from 5 to 55°C, an elastic stress rate of 200 mm/minute, and time from adhesion to start of test of 2 minutes. Three 180° peel tests were carried out under the aforementioned conditions. An average value for the peel strengths obtained of 1.0 N/cm was regarded as a pass at 5°C, and 0.5 N/cm and above at 55°C. Table 2 below shows these results. Each test material measured here had a peak for peel strength within the temperature range from 5 to 55°C, and in the temperature range exceeding 5°C and less than 55°C it was confirmed that the peel strength is higher than 5°C or 55°C, so that only the peel strengths at 5°C and 55°C are shown in Table 2 below.

Table 2

| | Storage stability (viscosity ratio) | Peel strength (N/cm) | |
|---|---|---|---|
| | | 5°C | 55°C |
| Example of Embodiment 1 | 1.0 | 2.5 | 0.6 |
| Example of Embodiment 2 | 1.0 | 2.0 | 0.6 |
| Example of Embodiment 3 | 1.0 | 1.2 | 0.8 |
| Comparative Example 1 | 1.0 | 1.2 | 0.4 |
| Comparative Example 2 | 3.6 | - | - |
| Comparative Example 3 | 1.0 | 2.8 | 0 .4 |
| Comparative Example 4 | 1.0 | 1.8 | 0.25 |
| Comparative Example 5 | 2.3 | - | - |
| Comparative Example 6 | 0.86 | - | - |
| Comparative Example 7 | - | 0.10 | 0.30 |
| Comparative Example 8 | - | 0.10 | 0.25 |
| Comparative Example 9 | - | 0.36 | 0.60 |

As is shown in Table 2 above, the storage stability of the asphalt composition of Comparative Example 1, where no resin acid had been added and the total acid number was less than 1.5 mgKOH/g, was satisfactory, but the peel strength at 55°C was low. In the asphalt composition of Comparative Example 2, where the content of petroleum-based solvent-extracted oil was less than 20 mass %, storage stability was poor and there was scattering of the characteristics within the composition. The asphalt composition of Comparative Example 3, where the content of petroleum-based solvent-extracted oil exceeded 60 mass %, was too pliant, the elastic modulus at high temperatures was low, and the peel strength at 55°C was low. Similarly, the asphalt composition of Comparative Example 4, where the content of thermoplastic elastomer was below the range of this invention, was too pliant, the elastic modulus at high temperatures was low, and the peel strength at 55°C was low. In the case of the asphalt composition of Comparative Example 5, where the content of thermoplastic elastomer instead exceeded the range of this invention, the storage stability was poor and there was scattering of the characteristics within the composition. Furthermore, the asphalt composition of Comparative Example 6, where resin acid was added beyond the range of this invention, had poor storage stability and there was scattering of characteristics within the composition. Also, the asphalt compositions of Comparative Examples 7 and 8, where the storage shear modulus at 10°C exceeded $1 \times 10^5$ Pa, had a low peel strength at both 5°C and 55°C. Furthermore, the asphalt composition of Comparative Example 9, where the storage shear modulus at 60°C was less than $4 \times 10^3$ Pa, had a low peel strength at 5°C.

In contrast, all of the asphalt compositions of Examples of Embodiment 1 to 3, prepared within the range of this invention, had excellent storage stability, and had excellent adhesive strength over a wide temperature range, with a peel strength at 5°C of 1.0 N/cm or higher and a peel strength at 55°C of 0.5 N/cm or higher, so that it was confirmed that they could be used as adhesives in both the summer and the winter months.

**Claims**

1. An asphalt composition **characterised in that** it contains from 8 to 14 mass % of a thermoplastic elastomer, from 1 to 5 mass % of resin acid and from 20 to 60 mass % of a petroleum-based solvent-extracted oil, the remainder being comprised of asphalt, and **in that** when the measuring frequency is 6.28 rad/sec, the storage shear modulus at 10°C is not more than $1 \times 10^5$ Pa and the storage shear modulus at 60°C is not less than $4 \times 10^3$ Pa, and **in that** the total acid number is not less than 1.5 mgKOH/g.

2. An asphalt composition according to claim 1, wherein the total acid number is not more than 12 mgKOH/g.

3. An asphalt composition according to claim 1 or claim 2, wherein the thermoplastic elastomer is a styrene-butadiene-styrene copolymer, a styrene-isoprene-styrene copolymer, a styrene-ethylene-butylene-styrene copolymer or a styrene-ethylene-propylene-styrene copolymer.

4. An asphalt composition according to any one of claims 1 to 3, wherein the resin acid is rosin, disproportionated rosin, a dimer acid or a trimer acid derived from abietic acid, or a mixture of two or more kinds thereof.

5. An asphalt composition according to any one of claims 1 to 4, wherein the asphalt is a solvent deasphalted asphalt, straight asphalt, or a mixture of these asphalts.

6. An adhesive sheet wherein an adhesive layer comprising an asphalt composition according to any one of claims 1 to 5 is disposed on one surface of the substrate.

7. An adhesive sheet according to claim 6, wherein the substrate is a non-woven fabric.


**Patentansprüche**

1. Asphaltzusammensetzung, **dadurch gekennzeichnet, dass** sie 8 bis 14 Masse-% eines thermoplastischen Elastomers, 1 bis 5 Masse-% Harzsäure und 20 bis 60 Masse-% eines auf Erdöl basierenden mit Lösungsmittel extrahierten Öls umfasst, wobei der Rest Asphalt umfasst, und **dadurch**, dass, wenn die Messfrequenz 6,28 rad/s beträgt, der Lagerungs-Schermodul bei 10°C nicht mehr als $1 \times 10^5$ Pa beträgt und der Lagerungs-Schermodul bei 60°C nicht weniger als $4 \times 10^3$ Pa beträgt und dass die Gesamtsäurezahl nicht weniger als 1,5 mg KOH/g beträgt.

2. Asphaltzusammensetzung nach Anspruch 1, wobei die Gesamtsäurezahl nicht mehr als 12 mg KOH/g beträgt.

3. Asphaltzusammensetzung nach Anspruch 1 oder Anspruch 2, wobei das thermoplastische Elastomer ein Styrol-Butadien-Styrol-Copolymer, ein Styrol-Isopren-Styrol-Copolymer, ein Styrol-Ethylen-Butylen-Styrol-Copolymer oder ein Styrol-Ethylen-Propylen-Styrol-Copolymer ist.

4. Asphaltzusammensetzung nach einem der Ansprüche 1 bis 3, wobei die Harzsäure Kolophonium, disproportioniertes Kolophonium, eine von Abietinsäure abgeleitete Dimersäure oder Trimersäure, oder ein Gemisch von zwei oder mehr Arten hievon ist.

5. Asphaltzusammensetzung nach einem der Ansprüche 1 bis 4, wobei der Asphalt ein Lösungsmittel-endasphaltierter Asphalt, reiner Asphalt, oder ein Gemisch dieser Asphalte ist.

6. Klebefolie, wobei eine Kleberschicht, umfassend eine Asphaltzusammensetzung nach einem der Ansprüche 1 bis 5 auf einer Oberfläche des Substrats abgelagert ist.

7. Klebefolie nach Anspruch 6, wobei das Substrat ein Vliesstoff ist.


**Revendications**

1. Composition d'asphalte **caractérisée en ce qu'**elle contient 8 à 14 % en masse d'un élastomère thermoplastique, 1 à 5 % en masse d'un acide résinique et 20 à 60 % en masse d'une huile à base de pétrole extraite avec un solvant, la partie restante étant constituée d'asphalte, et **en ce que** lorsque la fréquence de mesure est de 6,28 rad/s, le module de cisaillement élastique à 10 °C n'est pas supérieur à $1 \times 10^5$ Pa et le module de cisaillement élastique 60 °C n'est pas inférieur à $4 \times 10^3$ Pa, et **en ce que** l'indice d'acidité total n'est pas inférieur à 1,5 mg de KOH/g.

2. Composition d'asphalte selon la revendication 1, dans laquelle l'indice d'acidité total n'est pas supérieur à 12 mg de KOH/g.

3. Composition d'asphalte selon la revendication 1 ou selon la revendication 2, dans laquelle l'élastomère thermoplastique est un copolymère de type styrène-butadiène-styrène, un copolymère de type styrène- isoprène- styrène, un copolymère de type styrène-éthylène-butylène-styrène ou un copolymère de type styrène-éthylène-propylène-styrène.

**4.** Composition d'asphalte selon l'une quelconque des revendications 1 à 3, dans laquelle l'acide résinique est de la colophane, de la colophane disproportionnée, un acide dimère ou un acide trimère dérivé de l'acide abiétique ou un mélange de deux types ou plus de ceux-ci.

**5.** Composition d'asphalte selon l'une quelconque des revendications 1 4, dans laquelle l'asphalte est un asphalte désasphalté avec un solvant, un asphalte pur ou un mélange de ces asphaltes.

**6.** Feuille adhésive, dans laquelle une couche adhésive comprenant une composition d'asphalte selon l'une quelconque des revendications 1 à 5, est disposée sur une surface du substrat.

**7.** Feuille adhésive selon la revendication 6, dans laquelle le substrat est un tissu non tissé.

Figure 1

Figure 2

4

40mm

## Figure 3

(a)

0.5mm or
0.5kg/m²

(b)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005213981 A
- JP 3070785 A

- JP 2006299024 A